# EUROPÄISCHE PATENTANMELDUNG

(11) **EP 4 082 415 A1**
(43) Veröffentlichungstag der Anmeldung: **02.11.2022**
(21) Anmeldenummer: 22160743.5
(22) Anmeldetag: 08.03.2022
(51) Int. Cl.: A47K 13/00, B32B 27/00, A47K 13/02

(54) **WC-SITZANORDNUNG**

(30) Priorität: 29.04.2021 DE 102021110977
(71) Anmelder: Duravit Aktiengesellschaft, 78132 Hornberg (DE)
(72) Erfinder: Wittich, Juri, 77723 Gengenbach (DE)
(74) Vertreter: Lindner Blaumeier Patent- und Rechtsanwälte

(57) **Zusammenfassung**

WC-Sitzanordnung, umfassend einen Sitz oder einen Sitz und einen Deckel, wobei der Sitz (1) oder der Sitz (1) und der Deckel aus einem Polymerwerkstoff (2) gefertigt sind, wobei der Polymerwerkstoff (2) zu 40 - 99,5 Gew.-% aus wenigstens einem Biopolymer besteht, wobei in dem Polymerwerkstoff (2) Fasern (3) und/oder wenigstens ein anorganischer oder organischer partikulärer Füllstoff (4) enthalten ist, wobei der Anteil der Fasern (3) und/oder des Füllstoffs (4) zwischen 0,5 - 60,0 Gew.-% beträgt.

## Beschreibung

Die Erfindung betrifft eine WC-Sitzanordnung, umfassend einen Sitz oder einen Sitz und einen Deckel, wobei der Sitz oder der Sitz und der Deckel aus einem Polymerwerkstoff gefertigt sind.

Eine solche WC-Sitzanordnung wird regelmäßig an einem WC mit geeigneten Befestigungsmitteln befestigt und weist zumindest einen Sitz, der ringförmig oder U-förmig ausgeführt sein kann, auf, der relativ zum WC verschwenkt werden kann, also aus einer hochgeklappten Stellung in eine auf das WC abgesenkten Stellung und umgekehrt geschwenkt werden kann. Häufig umfasst die Sitzanordnung auch einen Deckel, der in Kombination mit dem Sitz schwenkbar gelagert ist und separat vom Sitz aus einer aufgeklappten in eine zugeklappte Stellung verschwenkt werden kann. Neben der Herstellung einer solchen Sitzanordnung respektive des Sitzes und des Deckels aus Holz oder einem Holzwerkstoff, in Verbindung mit einer geeigneten Lackierung oder Beschichtung, werden solche Sitzanordnungen zumeist aus einem Polymerwerkstoff, also aus Kunststoff gefertigt. Hierbei greift man in der Regel auf die Kunststoffgruppen der Duroplaste, der Thermoplaste sowie der Polyresine zurück. Bei den Duroplasten werden der Sitz bzw. der Sitz und der Deckel häufig aus einem Harnstoffharz, z. B. Ureaformaldehyd (UF) oder einem Melamin-Formaldehyd-Harz (MF/MPF) gefertigt. Diese Materialien werden in Granulatform in entsprechende Menge in eine Pressform eingebracht, dort bei erhöhter Temperatur von ca. 140°C-160°C verflüssigt und unter Druck in die gewünschte Form gebracht. Nach Abkühlen der Polymermatrix können die gepressten Teile dann entformt werden. Als Thermoplast wird zumeist Polypropylen (PP) verwendet, das, anders als zum Beispiel die Duroplaste, in einem Spritzgussverfahren zu dem Sitz oder Deckel verarbeitet werden kann.

Die verwendeten Polymerwerkstoffe basieren regelmäßig auf einem petrochemischen bzw. fossilen Ausgangsmaterial, also in einer nicht-erneuerbaren Ressource. Bei der Herstellung des jeweiligen Polymerwerkstoffs aus einem solchen Ausgangsmaterial wird CO₂ freigesetzt, das entweder in die Umwelt gelangt, oder aufwändig abzubauen ist. Des Weiteren ist die Verwendung mancher Polymerwerkstoffe wie beispielsweise von Ureaformaldehyd als gesundheitlich bedenklich eingestuft.

Der Erfindung liegt damit das Problem zugrunde, eine demgegenüber verbesserte WC-Sitzanordnung anzugeben.

Zur Lösung dieses Problems ist erfindungsgemäß eine WC-Sitzanordnung, umfassend einen Sitz oder einen Sitz und einen Deckel, wobei der Sitz oder der Sitz und der Deckel aus einer Polymerwerkstoff gefertigt sind, vorgesehen, die sich dadurch auszeichnet, dass der Polymerwerkstoff zu 40-99,5 Gew.-% aus wenigstens einem Biopolymer besteht, wobei in dem Polymerwerkstoff Fasern und/oder wenigstens ein anorganischer oder organischer partikulärer Füllstoff enthalten ist, wobei der Anteil der Fasern und/oder des Füllstoffs zwischen 0,5-60,0 Gew.-% beträgt.

Die erfindungsgemäße WC-Sitzanordnung zeichnet sich dadurch aus, dass der verwendete Polymerwerkstoff zu einem großen Anteil bzw. fast vollständig aus einem Biopolymer besteht. Ein solches Biopolymer ist ein Werkstoff, der aus biogenen, also nachwachsenden Rohstoffen besteht, und der darüber hinaus auch biologisch abbaubar sein kann. Hierunter fallen also insbesondere biobasierte Biopolymere, die aus organischen Rohstoffen gewonnen werden können. Darüber hinaus werden auch native Polymere, beispielsweise auf Basis von Cellulose oder Cellulosederivaten, wie auch biobasierte Kunststoffe, die durch chemische Veränderung der biogenen Ausgangsstoffe hergestellt werden können, beispielsweise Polylactide, ebenfalls als Biopolymer bezeichnet, die grundsätzlich geeignet sind, den Polymerwerkstoff oder einen Teil des Polymerwerkstoffs, aus dem der Sitz oder der Deckel gefertigt wird, zu bilden. Die Verwendung derartiger Biopolymere ermöglicht es daher, zu einem beachtlichen Teil bzw. nahezu vollständig auf den Einsatz von Polymerwerkstoffen basierend auf fossilen bzw. nicht nachwachsenden Rohstoffen zu verzichten. Bezogen auf die Sitzanordnung respektive den einzelnen Sitz oder Deckel führt dies zu einer deutlich verbesserten Umwelt- bzw. Klimabilanz, insbesondere im Hinblick darauf, dass bei der Herstellung und insbesondere Verwendung keine zusätzlichen Treibhausgase anfallen. Auch ist es möglich, auf die Verwendung gesundheitsgefährdender Polymerwerkstoffe zumindest zum Teil oder vollständig zu verzichten.

Durch Verwendung von Fasern und/oder wenigstens einem partikulären Füllstoff, entweder anorganischer oder organischer Natur, können der Sitzanordnung respektive dem Sitz oder dem Deckel, hergestellt aus Biopolymerwerkstoff, gewünschte Produkteigenschaften, insbesondere mechanische Eigenschaften, verliehen werden. Die Fasern, die in die Polymermatrix eingebettet sind, dienen der Verstärkung der Polymermatrix. Alternativ oder zusätzlich kann auch wenigstens ein partikulärer Füllstoff eingebracht respektive in die Polymermatrix eingebettet werden. Ein solcher Füllstoff kann insbesondere der Einstellung der Materialdichte wie auch der Kratzbeständigkeit, der Schlagzähigkeit sowie auch der Zug- und/oder Bruchfestigkeit dienen.

Der Gehalt an diesen Zuschlägen, seien es nur Fasern, seien es nur der Füllstoff, oder seien es Fasern und Füllstoff, liegt im Bereich von 0,5-60 Gew-% insgesamt. Das heißt, dass dieser Anteil je nach Menge an Polymerwerkstoff relativ gering bis beachtlich sein kann, je nachdem, welche Eigenschaften, insbesondere welche mechanischen Eigenschaften der fertige Sitz respektive Deckel aufweisen soll, und welche Eigenschaften von der Polymermatrix von Haus aus gegeben sind, die durch entsprechende Zugaben noch weiter eingestellt bzw. verbessert werden können.

Wie ausgeführt, können verschiedenartige Biopolymere verwendet werden. Verwendet werden kann ein Biopolymer aus Lignin, Polylactiden, Polycaprolacton, Naturharzen, Bio-Polyethylen, Naturkautschuk, Schellack, Guttapercha, Cellulose, Mastix, Stärke, Proteinen, natürlichen Fettsäuren, oder einer Mischung daraus, wie auch Co-Polymere der vorstehend genannten Stoffe. Es können also unterschiedliche Biopolymertypen verwendet werden, sodass auch in Bezug auf die geforderten Eigenschaften des Sitzes respektive Deckels eine entsprechende Auswahlmöglichkeit gegeben ist.

Dabei kann nur ein Biopolymer zur Bildung des Polymerwerkstoffs oder eines Teils des Polymerwerkstoffs verwendet werden. Alternativ kann aber auch eine Mischung aus mehreren unterschiedlichen Biopolymeren im Polymerwerkstoff enthalten sein oder diesen bilden. Das heißt, dass auch zwei oder mehr verschiedene Biopolymere, insbesondere der vorstehend genannten Polymertypen, verwendet werden können, was die Variationsbandbreite noch vergrößert.

Wie beschrieben sind gemäß einer ersten Alternative Fasern in den Polymerwerkstoff respektive die ausgehärtete Polymermatrix eingebettet. Bei diesen Fasern kann es sich beispielsweise um Naturfasern handeln, was in Verbindung mit dem oder den verwendeten Biopolymeren den ökologisch basierten Charakter noch weiter verstärkt. Als Naturfasern sind insbesondere Pflanzenfasern wie Bambus-, Sisal-, Flachs-, Kokos- oder Maisfasern verwendbar, die ohne Probleme in hinreichender Menge vorhanden sind und mitunter als Abfallprodukte bei der Verarbeitung der entsprechenden Pflanzen anfallen. Bei den genannten Faserarten handelt es sich insbesondere um schnellwachsende Pflanzenmaterialien. Daneben können natürlich auch Holzfasern verwendet werden, also ebenfalls natürliche Fasern, die in große Menge auch bei der Verarbeitung von Holz anfallen. Das heißt, dass grundsätzlich natürliche respektive Pflanzenfasern verwendet werden können.

Zusätzlich oder alternativ dazu ist es auch denkbar, dass die Fasern Glas-, Kohlenstoff- oder polymerbasierte Textilfasern sind. Auch diese Fasern eignen sich hervorragend als Verstärkungsfasen und lassen sich problemlos in die Polymermatrix einbetten.

Denkbar ist es, nur einen Fasertyp, also beispielsweise nur Holzfasern oder nur Glasfasern oder ähnliches einzubringen. Daneben ist es aber natürlich auch denkbar, eine Mischung aus verschiedenen Fasern in den Polymerwerkstoff einzubetten. Auch dies ermöglicht wiederum die Variation der hierüber erreichbaren Matrixverstärkung in beachtlichem Maße.

Die Länge der verwendeten Fasern sollte sich im Bereich zwischen 1-10 mm bewegen, bei einer Faserstärke zwischen 0,1-1 mm. Bei der Verwendung von Glasfaser ist der Einsatz von 2 - 5 mm langen Fasern bevorzugt.

Auch als Füllstoffe können unterschiedliche Füllstoffarten eingesetzt werden. Denkbar ist es, als partikulären Füllstoff Glas, insbesondere sphärisches Glaseinzubringen. Dieses Glas, das als Glasmehl eingebracht wird, dient auch der Verbesserung der Verlaufseigenschaften im Rahmen der Herstellung, also des Formprozesses.

Zusätzlich oder alternativ kann auch ein partikulärer Füllstoff in Form von Kalk, Quarz, Dolomit, Feldspat, Siliziumcarbid, Aluminiumoxid, Aluminiumhydroxid, Kalziumsilikat, Magnesiumsilikat, Zirkonoxid oder Titanoxid verwendet werden. Diese Füllstoffe verbessern insbesondere die Kratzbeständigkeit.

Des Weiteren kann als partikulärer Füllstoff zur Verbesserung des Flammschutzes Aluminiumtrihydrat oder Perlit eingebracht werden.

Ferner besteht die Möglichkeit, als partikulären Füllstoff auch Hohlglaskugeln oder Holglasperlen einzubringen, also kleine oder kleinste Hohlkörper, die insbesondere der Reduzierung der Dichte und damit des Gewichts des hergestellten Sitzes respektive Deckels dienen.

Und schließlich kann auch beispielsweise Ruß in Form von Rußpartikeln zur Verbesserung der UV-Beständigkeit oder zur Einstellung der elektrischen Leitfähigkeit eingebracht werden.

Natürlich kann nicht nur ein einziger partikulärer Füllstofftyp eingebracht werden. Vielmehr ist es auch denkbar, eine Mischung aus mehreren unterschiedlichen Füllstoffen einzubringen.

Die durchschnittliche Partikelgröße sollte im Bereich zwischen 0,01- 2,0 mm, insbesondere zwischen 0,05-1 mm liegen.

Häufig wird es auch gewünscht, dass der Sitz bzw. der Deckel eine bestimmte Farbe aufweist. Neben der Möglichkeit, die Farbgebung mittels eines aufgebrachten Lacks zu erreichen, ist es auch denkbar, in den Polymerwerkstoff wenigstens ein anorganisches oder organisches Pigment zu 0,5-5,0 Gew.-% einzubringen. Das heißt, dass über dieses Pigment eine gezielte Färbung des Materials erreicht wird, wobei der entsprechend hergestellte Körper vollständig durchgefärbt wird.

Verwendet werden können beispielsweise anorganische Pigmente auf Basis von Oxiden, Oxidhydroxiden, Sulfiden, Silicaten, Sulfaten oder Carbonaten, wobei als Beispiel Titandioxid zu nennen ist, über das die übliche weiße Farbe verliehen wird. Eine Weißfärbung kann auch über Aluminiumtrihydrat, das zusätzlich auch als Flammschutzmittel dient, Zirkonsilikat, Aluminiumoxid, Kalziumkarbonat, Bariumkarbonat, Kaolinschamotte, Zinnoxid oder Zinkoxid erreicht werden. Eisenoxid, Siliziumcarbid, Nano-Carbon-Röhrchen oder Ruß können beispielsweise als Pigmente zur Herstellung dunklerer bzw. grauer oder schwarzer Körper eingebracht werden, wie auch andere Farben durch entsprechende Spinelle ausgebildet werden können, wobei auch hier eine große Farbvariationsmöglichkeit gegeben ist.

Alternativ können auch organische Pigmente wie beispielsweise Indigo, Chlorophyll wie auch synthetisch hergestellte organische Farben zur Farbgebung verwendet werden.

Neben der Möglichkeit, nur eine Pigmentart zu verwenden, ist es natürlich auch hier denkbar, eine Mischung aus verschiedenen anorganischen oder verschiedenen organischen Pigmenten einzubringen. Das heißt, dass letztlich verschiedene Farbpigmente mit verschiedenen Farben gemischt werden, um eine Mischfarbe zu erhalten und so die Farbpalette weiter zu vergrößern. Auch ist es denkbar, eine Mischung aus anorganischen und organischen Pigmenten einzubringen.

Gemäß einer besonders vorteilhaften Weiterbildung kann vorgesehen sein, dass wenigstens ein Zuschlagsstoff mit antibakterieller Eigenschaft zu 0,1-5,0 Gew.-% enthalten ist. Hierüber wird der Sitzanordnung respektive dem Sitz und gegebenenfalls dem Deckel eine von Haus aus gegebene, quasi intrinsische antibakterielle Eigenschaft verliehen. Denn das Sitz- bzw. Deckelmaterial ist aufgrund dieses eingebrachten antibakteriellen Zuschlagsstoffs von Haus aus zu einem gewissen Grad antibakteriell wirkend, also in der Lage, Bakterien, die sich regelmäßig oberflächlich ansiedeln, abzutöten bzw. zumindest deren Vermehrung zu limitieren bzw. zu unterbinden. Dies ist aus hygienischer Sicht von besonderem Vorteil, als an einer WC-Sitzanordnung mitunter Schmutz und damit Bakterien anhaften können. Durch Einbringen dieses Zuschlagsstoffes kann vorteilhaft die Vermehrung der Bakterien gehemmt oder die Bakterien abgetötet werden.

Als solche Zuschlagsstoffe sind vorzugsweise Metallionen, insbesondere Silber-, Kupfer-, Zink-, Blei- oder Zinn-Ionen enthalten. Die Vermehrungshemmung oder die Abtötung basiert auf einem oligodynamischen Effekt. Der die Metallionen liefernde Zuschlagsstoff wird auf einfacher Weise partikulär eingebracht.

Weiterhin ist es denkbar, dass der Sitz oder der Deckel eine Beschichtung aufweist. Für den Fall, dass beispielsweise keine Pigmente eingebracht werden, wäre über eine solche Beschichtung in Form eines Lacks eine Farbgebung denkbar. Bevorzugt haben die verwendbaren Beschichtungen aber auch eine antibakterielle Eigenschaft, das heißt, dass hierüber - alternativ oder zusätzlich zu den vorstehend genannten antibakteriellen Zuschlagsstoffen - eine Oberfläche mit antibakterieller Eigenschaft aufgebracht werden kann. Als eine solche Beschichtung kann ein Lack, ein Pulverlack, ein Gelcoat, ein Topcoat oder eine Folie eingesetzt werden. Als Lack kann beispielsweise ein Lack auf Wasserbasis, Lösemittelbasis oder Ölbasis verwendet werden, oder Ultra-High-Solid-Lacke (UHS), die einen sehr geringen Lösemittelanteil und einen sehr geringen Anteil an volatilen organischen Verbindungen besitzen. Ein Gelcoat ist eine Beschichtung, die als Schutzschicht aufgebracht wird und die darunterliegende Polymermatrix versiegelt und gleichzeitig auch vor UV-Strahlung schützt. In ähnlicher Weise wirkt auch ein Topcoat. Da sowohl der Gelcoat als auch der Topcoat fluid aufgebracht werden, ist es ohne Probleme möglich, diesen wie natürlich auch dem Lack entsprechende Zuschlagsstoffe, die beispielsweise die vorstehend genannten Metallionen, Pigmente oder Füllstoffe enthalten, zuzugeben. Bei Pulverlack ist die Zugabe der oben genannten Zuschlagstoffe in Pulverform möglich.

Alternativ kann auch eine Folie aufkaschiert werden, also eine Kunststofffolie, die fest mit der darunterliegenden Polymermatrix verbunden wird. Auch diese Folie kann durch Einbringen entsprechender Zuschlagsstoffe bei ihrer Herstellung antibakteriell ausgerüstet werden.

Daneben betrifft die Erfindung eine Sanitäreinrichtung, umfassend ein WC sowie eine WC-Sitzanordnung der vorstehend beschriebenen Art. Dabei kann es sich um ein Stand-WC oder ein Hänge-WC handeln.

Weitere Vorteile und Einzelheiten der vorliegenden Erfindung ergeben sich aus den im Folgenden beschriebenen Ausführungsbeispielen sowie anhand der Zeichnungen. Dabei zeigen:

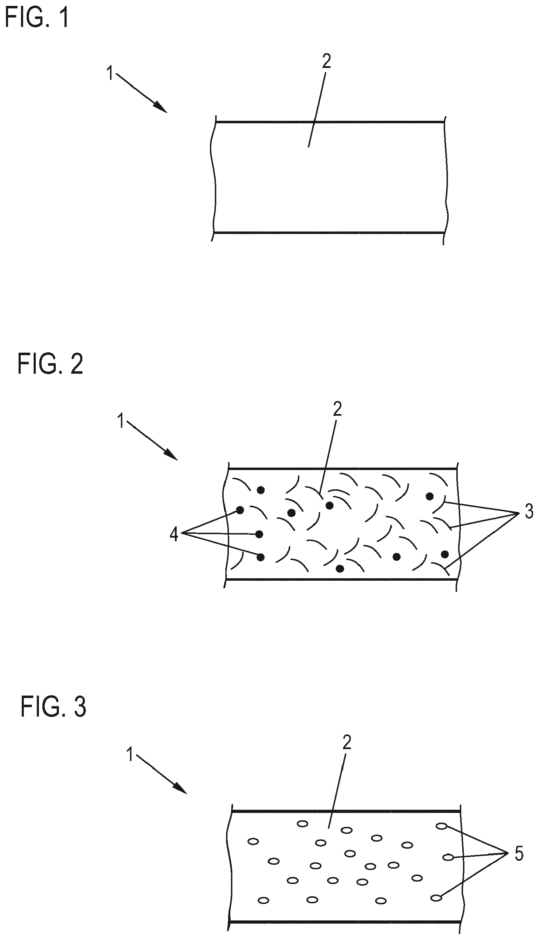

- Fig. 1-10: Verschiedene Prinzipdarstellungen, geschnitten, als Teilansichten einer WC-Sitzanordnung respektive eines Sitzes oder Deckels, jeweils bestehend aus unterschiedlichen Materialien.

Nachfolgend werden in den Tabellen 1 und 2 zunächst verschiedene Zusammensetzungsvarianten des den Sitz oder den Deckel bildenden Materials, entweder nur umfassend den Polymerwerkstoff, oder auch zusätzliche Bestandteile, angegeben.

**Tabelle 1**

| Komponente | Gew.-% | | | |
|---|---|---|---|---|
| | Variante 1 | Variante 2 | Variante 3 | Variante 4 |
| | ohne Füllstoff / Zusch lagsstoff | mit Pigmenten | mit Füllstoffen / Fasern | mit Füllstoff, Fasern, Pigmenten, Zuschlagstoff |
| Biopolymer | 60 - 100 | 55 - 99 | 40 - 99 | 40 - 99 |
| Herkömmliches Polymer | 0-40 | 0-40 | 0-40 | 0-40 |
| Anorganischer Füllstoff | - | - | 0,5 - 60 | 0,5 - 60 |
| Organischer Füllstoff | - | - | 0,5 - 60 | 0,5 - 60 |
| Fasern | | | 0,5 - 60 | 0,5 - 60 |
| Pigmente | - | 1 -5 | 0,5 - 5 | 0,5 - 5 |
| Zuschlagsstoff mit antibakterieller Wirkung | - | - | - | 0,1 -2 |

**Tabelle 2**

| Komponente | Gew.-% | | | |
|---|---|---|---|---|
| | Variante 1 | Variante 2 | Variante 3 | Variante 4 |
| | ohne Füllstoff / Zusch lagsstoff | mit Pigmenten | mit Füllstoffen / Fasern | mit Füllstoff, Fasern, ggf. Pigmenten, Zuschlagstoff |
| Biopolymer | 60 - 99 | 55 - 99 | 40 - 98 | 40 - 98 |
| Herkömmliches Polymer | 0-49 | 0-39 | 0-40 | 0-40 |
| Anorganischer Füllstoff | - | - | 0,5 - 60 | 0,5 - 60 |
| Organischer Füllstoff | - | - | 0,5 - 60 | 0,5 - 60 |
| Fasern | | | 0,5 - 60 | 0,5 - 60 |
| Pigmente | - | 0-5 | 0-5 | 0-5 |
| Zuschlagsstoff mit antibakterieller Wirkung | - | - | - | 0-2 |
| Beschichtung | 1 -5 | 1 -5 | 1 - 5 | 1 - 5 |

In Tabelle 1 sind die den Sitz- oder Deckelwerkstoff bildenden Komponenten angegeben. Daneben sind vier Varianten 1-4 angegeben, die jeweils unterschiedliche Bestandteile aufweisen. Die jeweiligen Angaben sind in Gew.-%.

Als den Werkstoff bildende Komponenten ist zum einen das Biopolymer angegeben, bei dem es sich entweder nur um ein Biopolymer, oder um eine Mischung mehrerer Biopolymere handeln kann.

Als weitere optionale Polymerkomponente ist ein herkömmliches Polymer, also ein Polymer auf Erdölbasis, angegeben, das jedoch auch nicht enthalten sein muss, wenn der Polymerwerkstoff ausschließlich durch das Biopolymer gebildet wird.

Des Weiteren ist als Option ein anorganischer Füllstoff sowie ein organischer Füllstoff als Komponente aufgeführt. Auch die Füllstoffe sind optional.

Dies gilt auch für die Fasern, die zur Verstärkung eingebracht werden können.

Angegeben sind ferner optionale Zuschläge in Form von Farbpigmenten, wie auch ein optionaler Zuschlagsstoff mit antibakterieller Wirkung.

Bei Variante 1 gemäß Tabelle 1 ist nur der Polymerwerkstoff vorhanden, wobei dieser entweder nur aus 100% Biopolymer bestehen kann, oder zusätzlich auch aus herkömmlichem Polymer, also aus einer Polymermischung aus Biopolymer und herkömmlichen Polymer. Dabei beträgt der Anteil an herkömmlichem Polymer maximal 40 Gew.-% und der Anteil an Biopolymer minimal 60 Gew.-%. Weitere Komponenten sind nicht enthalten.

Variante 2 zeichnet sich dadurch aus, dass zusätzlich zu dem Biopolymer und dem optionalen herkömmlichen Polymer ein Pigment enthalten ist, wobei der Pigmentanteil 1-5 Gew.-% betragen kann.

Gemäß Variante 3 ist wiederum entweder nur Biopolymer oder zusätzlich auch herkömmliches Polymer zur Bildung des Polymerwerkstoffs enthalten, wie auch, wie bereits aus Variante 2 bekannt, ein Pigment. Zusätzlich sind noch drei verschiedene Füllmittel angegeben, nämlich anorganischer Füllstoff, organischer Füllstoff und Fasern, wobei diese im gezeigten Ausführungsbeispiel alle drei enthalten sind, jedoch in ihrer Zuschlagsmenge entsprechend stark variabel sind. Im gezeigten Beispiel sind alle drei zu wenigstens 0,5 Gew.-% enthalten. Dies ist aber nicht unbedingt zwingend, sondern nur im Beispiel der Fall. Selbstverständlich ist es denkbar, beispielsweise auch nur anorganische Füllstoffe und keine organischen Füllstoffe einzubringen, und zusätzlich etwaige Fasern oder ähnliches.

Gemäß Variante 4 schließlich, die auf Variante 3 aufsetzt, ist zusätzlich noch ein Zuschlagsstoff mit antibakterieller Wirkung enthalten, und zwar zu 0,1-2 Gew.-%, um dem Sitz- oder Deckelwerkstoff insgesamt eine antibakterielle Eigenschaft zu verleihen.

Gemäß Tabelle 2, die wie Tabelle 1 aufgebaut ist, werden ebenfalls vier verschiedene Varianten verschiedener Komponentenzusammensetzungen in Gew.-% angegeben. Diese Varianten 1-4 entsprechen letztlich den Varianten 1-4 gemäß Tabelle 1. Zusätzlich ist hier jedoch noch eine Beschichtung als weitere Komponente angegeben, die am fertigen Sitz oder Deckel den Basiswerkstoff belegt. Bei der Beschichtung kann es sich wie ausgeführt um einen Lack, einen Pulverlack, einen Topcoat, einen Gelcoat oder eine aufkaschierte Folie handeln. Bei allen Varianten 1-4 ist hier exemplarisch eine solche Beschichtung vorgesehen. Da auch diese natürlich einen gewissen Gew.-%-Anteil ausmacht, variieren zwangsläufig die Anteile der sonstigen Komponenten geringfügig, da natürlich in jeder Variante gemäß Tabelle 1 und 2 die Summe der jeweiligen Komponentenanteile 100 Gew.-% beträgt.

Die Fig. 1-10 zeigen verschiedene Prinzipdarstellungen als Schnittansichten durch einen Sitz oder einen Deckel. Nachfolgend wird grundsätzlich von einem Sitz 1 als gezeigtem Gegenstand ausgegangen, wobei natürlich das Gleiche für einen Deckel gilt.

Gemäß Fig. 1 besteht der Sitz 1 aus einem ausgehärteten Polymerwerkstoff 2, bei dem es sich entweder um einen Werkstoff handelt, der zu 100% aus einem Biopolymer oder einer Biopolymermischung besteht, wobei Biopolymere wie einleitend beschrieben verwendet werden können. Alternative ist es denkbar, dass der Polymerwerkstoff 2 respektive die ausgehärtete Polymermatrix auch aus einer Mischung aus einem oder mehreren Biopolymeren sowie einem oder mehreren herkömmlichen Kunstoffen besteht.

Beim Ausführungsbeispiel gemäß Fig. 1 besteht der Sitz 1 nur aus diesem Polymerwerkstoff 2, weitere Zugaben sind nicht enthalten.

Beim Ausführungsbeispiel gemäß Fig. 2 sind in den Polymerwerkstoff 2 Fasern 3 eingebracht respektive eingebettet, die der Verstärkung dienen. Bei den Fasern kann es sich um Holzfasern, Bambusfasern, Kokosfasern oder ähnliches handeln.

Zusätzlich sind auch ein oder mehrere Füllstoffe 4 im gezeigten Beispiel eingebracht, bei denen es sich um die beschriebenen anorganischen oder organischen Füllstoffe handeln kann, beispielsweise um Quarzpartikel, Dolomitpartikel etc., oder aber um Hohlglaskungeln oder ähnliches, wobei auf die einleitenden Ausführungen zu den verwendbaren anorganischen bzw. organischen Füllstoffen und deren Funktion verwiesen wird. Wenngleich im Beispiel gemäß Fig. 2 sowohl Fasern 3 als auch Füllstoff 4 enthalten sind, ist es denkbar, nur Fasern 3 oder nur Füllstoffe 4, jeweils gleich welcher Art, einzubringen. Natürlich ist es auch denkbar, Mischungen verschiedener Fasern 3 und/oder Mischungen verschiedener Füllstoffe 4 einzubringen.

Beim Ausführungsbeispiel gemäß Fig. 3 besteht der Sitz 1 wiederum aus dem Polymerwerkstoff 2, wobei in diesem im gezeigten Beispiel ein Zuschlagsstoff 5 mit antibakterieller Wirkung, also Metallionen, die antibakterielle Wirkung zeigen, wie Silber-, Kupfer-, Zinn- oder Zink-Ionen, enthalten ist. Dieser Zuschlagsstoff 5 wird in Form entsprechender Metall- oder Metalllegierungspartikel eingebracht.

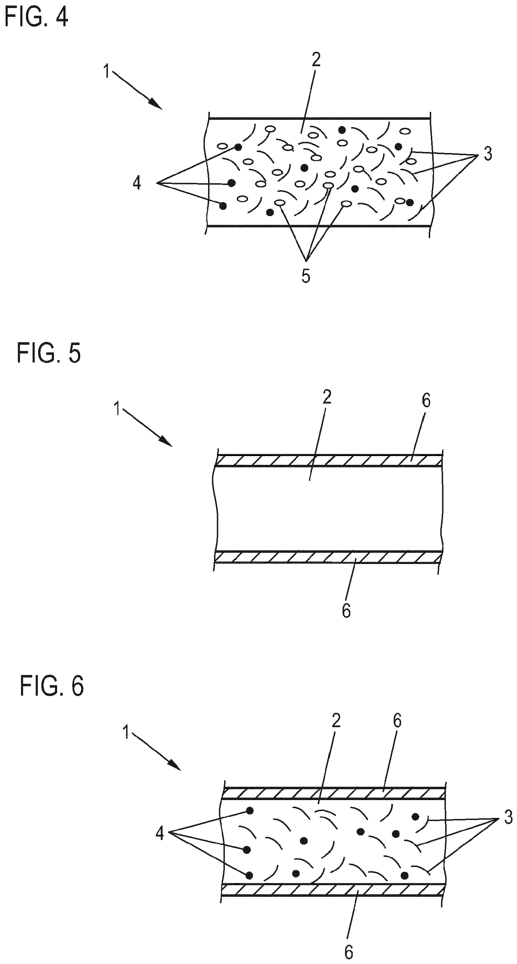

Beim Ausführungsbeispiel gemäß Fig. 4 schließlich finden sich sowohl Fasern 3 als auch Füllstoffe 4 sowie der Zuschlagsstoff 5 respektive die Metallionen in dem Polymerwerkstoff 2, der wiederum zu 100% aus Biopolymer oder einer Mischung aus Biopolymer und herkömmlichem Polymer bestehen kann.

Die Fig. 5-7 zeigen Ausführungsbeispiele eines Sitzes 1, der wiederum aus einem ausgehärteten Polymerwerkstoff 2, also einer Polymermatrix besteht. Beim Beispiel gemäß 5 ist nur dieser Polymerwerkstoff 2 vorgesehen, vergleichbar mit Fig. 1. Bei diesem Ausführungsbeispiel ist jedoch zusätzlich der Polymerwerkstoff 2 an beiden Seiten oder Flächen mit einer Beschichtung 6 versehen, beispielsweise einem Lack, einem Pulverlack, einem Gelcoat, einem Topcoat oder einer aufkaschierten oder aufgeklebten farbigen oder oberflächlich strukturierten Folie. Über diese Beschichtung 6 wird bei den Beispielen gemäß der Fig. 5-7 ausschließlich das Aussehen beeinflusst bzw. definiert, also letztlich das Erscheinungsbild und die Farbe respektive Struktur oder ähnliches. Sonstige spezifische Eigenschaften weist die Beschichtung 6 in diesen Ausführungsbeispielen nicht auf.

Fig. 6 zeigt eine Variante eines Sitzes 1, wiederum bestehend aus einem Polymerwerkstoff 2, in den hier wiederum, ähnlich wie bei Fig. 2, Fasern 3 eingebettet sind, bei denen es sich wiederum um beliebige Pflanzenfasern oder aber auch Glas- oder Kohlenstoff- oder Textilfasen handeln kann. Darüber hinaus sind hier auch Füllstoffe 4 anorganischer und/oder organischer Natur enthalten, ähnlich wie beim Ausführungsbeispiel gemäß Fig. 2. Im Unterschied zur Fig. 2 ist auch hier wiederum beidseits eine Beschichtung 6 aufgebracht, ähnlich wie zu Fig. 5 beschrieben, der jedoch keine spezifische Wirkung außer die Beeinflussung des Äußeren respektive des Designs zukommt.

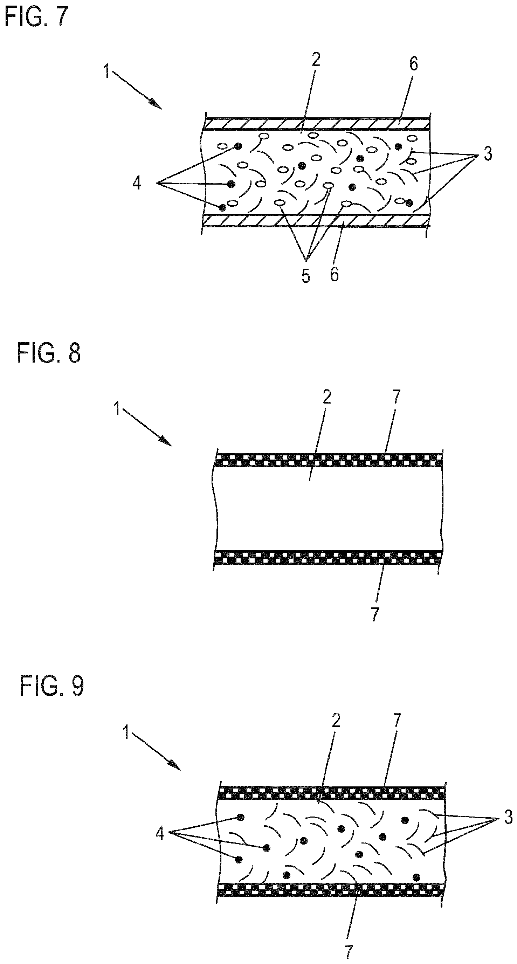

Fig. 7 schließlich zeigt einen Sitz 1 bestehend aus einem Polymerwerkstoff 2 mit eingebetteten Fasern 3 sowie eingebetteten anorganischen und/oder organischen Füllstoffen 4. Zusätzlich ist hier, ähnlich Fig. 4, ein Zuschlagsstoff 5 in Form von Metallionen enthalten, um dem Basiswerkstoff eine antibakterielle Eigenschaft zu verleihen.

Den Beispielen der Fig. 5 und 6 folgend, ist auch hier ober- und unterseitig jeweils eine Beschichtung 6 in Form eines Lacks, Gel oder Topcoats oder einer Folie aufgebracht.

Die Fig. 8-10 zeigen schließlich eine dritte Variation eines Sitzes 1, der wiederum aus einem Polymerwerkstoff 2 besteht, der zu 100% aus Biopolymer oder aus einer Mischung aus Biopolymer und herkömmlichen Polymer bestehen kann. Auch hier ist eine Beschichtung ober- und unterseitig aufgebracht, jedoch hat diese Beschichtung 7 - anders als die Beschichtung 6 - zusätzlich eine antibakterielle Wirkung. Das heißt, dass in den verwendeten Lack oder Gel- oder Topcoat oder die Folie ein entsprechender Zuschlagsstoff mit antibakterieller Wirkung eingebracht ist, also ein partikulärer Stoff, der entsprechende Metallionen aufweist respektive in der entsprechenden Matrix verteilt. Hierüber wird also die Oberfläche jeweils antibakteriell ausgerüstet.

Beim Ausführungsbeispiel gemäß Fig. 9 sind im Polymerwerkstoff 2 wiederum die Fasern 3 wie auch die Füllstoffe 4, seien es anorganische oder organische Füllstoffe, eingebettet. Zusätzlich ist auch hier wiederum eine Beschichtung 7, die antibakterielle Eigenschaften aufweist, beidseits auf den Basiswerkstoff aufgebracht.

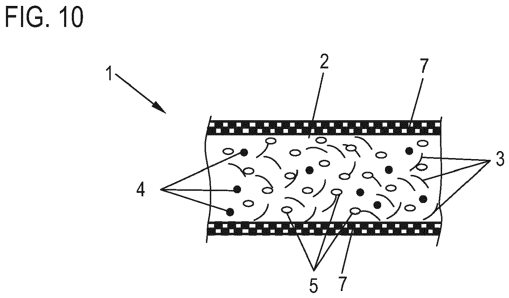

Das Ausführungsbeispiel gemäß Fig. 10 schließlich zeigt einen Sitz 1 aus einem Polymerwerkstoff 2, in den sowohl Fasern 3 als auch Füllstoffe 4 sowie der Zuschlagsstoff 5, der die antibakterielle Eigenschaft verleiht, respektive die Metallionen zur Verfügung stellt, eingebettet, entsprechend den Ausführungsbeispielen der Fig. 4 und 7. Den Ausführungsbeispielen gemäß der Fig. 8 und 9 folgend, ist auch hier der Polymerwerkstoff 2 ober- und unterseitig mit einer Beschichtung 7 mit antibakterieller Eigenschaft versehen. Der Vorteil der Einbettung des Zuschlagsstoffs 7 mit der antibakteriellen Eigenschaft in den Polymerwerkstoff 2 selbst, was dazu führt, dass eben der Basiswerkstoff insgesamt antibakterielle Eigenschaften hat, liegt darin, dass, sollte die ebenfalls antibakteriell wirkende Beschichtung 7 an irgendeiner Stelle verletzt werden, die Oberfläche nach wie vor antibakterielle Eigenschaften aufweist, die dann aber lokal im Bereich der Verletzung eben von Basismaterial respektive dem dortigen Zuschlagsstoff 5 verliehen werden.

Je nach verwendeten Komponenten respektive der Art der Ausgangsstoffe sind unterschiedliche Herstellungsverfahren denkbar. So ist es möglich, den Sitz oder Deckel unter Verwendung von partikulären Ausgangsstoffen, also in Form von entsprechenden Granulaten oder ähnliches, in einem Pressverfahren mit Metallformen z. B. aus Edelstahl, Nickel oder Aluminium herzustellen, wobei die partikulären Komponenten zunächst durch Erwärmung aufgeschmolzen werden und so dann in Form gebracht werden.

Alternativ dazu ist es auch denkbar, den Sitz oder Deckel unter Verwendung entsprechender partikulärer Komponenten in einem Spritzgussverfahren herzustellen, wobei hierzu natürlich der Polymerwerkstoff respektive dessen Ausgangskomponenten zunächst aufgeschmolzen wird, um eine spritzfähige Maße zu bilden, in der die sonstigen partikulären Komponenten eingebunden sind.

Weiterhin besteht die Möglichkeit, den Sitz oder den Deckel aus einem vorgefertigten Halbzeug, wie einer Scheibe oder einer Platte durch Tiefziehen herzustellen. Dieses vorgefertigte Halbzeug besteht aus sämtlichen erforderlichen, den Basiswerkstoff bildenden Komponenten. Im Tiefziehverfahren wird diesem Halbzeug lediglich die entsprechende Endform gegeben.

Weiterhin ist es denkbar, den Sitz oder Deckel aus einer geeigneten Pressmaße, die auf Basis der partikulären Komponenten hergestellt wurde, in einem Sheet-Molding-Compound-Verfahren (SMC) mit Hilfe von Pressformen herzustellen.

Nach Herstellung des entsprechenden Formteils kann dieses entweder bereits fertig sein, oder es kann auch eine zusätzliche Beschichtung aufgebracht werden, die entweder nur optische Eigenschaften hat, oder zusätzlich auch antibakteriell ausgerüstet sein kann.

## Patentansprüche

1. WC-Sitzanordnung, umfassend einen Sitz oder einen Sitz und einen Deckel, wobei der Sitz (1) oder der Sitz (1) und der Deckel aus einem Polymerwerkstoff (2) gefertigt sind, **dadurch gekennzeichnet, dass** der Polymerwerkstoff (2) zu 40 - 99,5 Gew.-% aus wenigstens einem Biopolymer besteht, wobei in dem Polymerwerkstoff (2) Fasern (3) und/oder wenigstens ein anorganischer oder organischer partikulärer Füllstoff (4) enthalten ist, wobei der Anteil der Fasern (3) und/oder des Füllstoffs (4) zwischen 0,5 - 60,0 Gew.-% beträgt.

2. WC-Sitzanordnung nach Anspruch 1, **dadurch gekennzeichnet, dass** das Biopolymer ein Biopolymer aus Lignin, Polylactiden, Polycaprolacton, Naturharzen, Bio-Polyethylen, Naturkautschuk, Schellack, Guttapercha, Cellulose, Mastix, Stärke, Proteinen, natürlichen Fettsäuren, oder einer Mischung daraus, oder einem Co-Polymer der vorstehend genannten Stoffe ist.

3. WC-Sitzanordnung nach Anspruch 1 oder 2, **dadurch gekennzeichnet, dass** eine Mischung aus mehreren unterschiedlichen Biopolymeren enthalten ist.

4. WC-Sitzanordnung nach einem der vorangehenden Ansprüche, **dadurch gekennzeichnet, dass** die Fasern (3) aus einem Naturstoff sind.

5. WC-Sitzanordnung nach Anspruch 4, **dadurch gekennzeichnet, dass** die Fasern (3) Holz-, Bambus-, Sisal-, Flachs-, Kokos- oder Maisfasern sind.

6. WC-Sitzanordnung nach einem der vorangehenden Ansprüche, **dadurch gekennzeichnet, dass** die Fasern (3) Glas-, Kohlenstoff- oder polymerbasierte Textilfasern sind.

7. WC-Sitzanordnung nach einem der vorangehenden Ansprüche, **dadurch gekennzeichnet, dass** eine Mischung aus verschiedenen Fasern (3) enthalten ist.

8. WC-Sitzanordnung nach einem der vorangehenden Ansprüche, **dadurch gekennzeichnet, dass** als Füllstoff (4) Glas, insbesondere sphärisches Glas, Kalk, Quarz, Dolomit, Feldspat, Siliziumcarbid, Aluminiumoxid, Aluminiumhydroxid, Kalziumsilikat, Magnesiumsilikat, Zirkonoxid, Titanoxid, Aluminiumtrihydrat, Perlit, Hohlglaskugeln oder Hohlglasperlen oder Ruß enthalten ist.

9. WC-Sitzanordnung nach einem der vorangehenden Ansprüche, **dadurch gekennzeichnet, dass** eine Mischung aus verschiedenen Füllstoffen (4) enthalten ist.

10. WC-Sitzanordnung nach einem der vorangehenden Ansprüche, **dadurch gekennzeichnet, dass** wenigstens ein anorganisches oder organisches Pigment zu 0,5 - 5,0 Gew.-% enthalten ist.

11. WC-Sitzanordnung nach Anspruch 10, **dadurch gekennzeichnet, dass** das anorganische Pigment ein Pigment auf Basis von Oxiden, Oxidhydroxiden, Sulfiden, Silicaten, Sulfaten oder Carbonaten, oder das organische Pigment Indigo, Chlorophyll und synthetisch hergestellte organische Farben ist.

12. WC-Sitzanordnung nach Anspruch 10 oder 11, **dadurch gekennzeichnet, dass** eine Mischung aus verschiedenen anorganischen oder organischen Pigmenten oder eine Mischung aus anorganischen und organischen Pigmenten enthalten ist.

13. WC-Sitzanordnung nach einem der vorangehenden Ansprüche, **dadurch gekennzeichnet, dass** wenigstens ein Zuschlagstoff (5) mit antibakterieller Eigenschaft zu 0,1 - 5,0 Gew.-% enthalten ist.

14. WC-Sitzanordnung nach Anspruch 13, **dadurch gekennzeichnet, dass** der Zuschlagstoff (5) Metallionen, insbesondere Silber-, Kupfer-, Zinn- oder Zinkionen enthält.

15. WC-Sitzanordnung nach einem der vorangehenden Ansprüche, **dadurch gekennzeichnet, dass** der Sitz (1) oder der Deckel eine Beschichtung (6, 7) aufweist.

16. WC-Sitzanordnung nach Anspruch 15, **dadurch gekennzeichnet, dass** die Beschichtung (6, 7) ein Lack, Pulverlack, Gelcoat, Topcoat oder eine Folie ist.

17. WC-Sitzanordnung nach Anspruch 15 oder 16, **dadurch gekennzeichnet, dass** die Beschichtung (7) antibakterielle Eigenschaften hat.

18. Sanitäreinrichtung, umfassend ein WC sowie eine WC-Sitzanordnung nach einem der vorangehenden Ansprüche.
